# EUROPEAN PATENT APPLICATION

(11) **EP 4 557 875 A1**
(43) Date of publication of application: **21.05.2025**
(21) Application number: 23875079.8
(22) Date of filing: 06.09.2023
(51) Int. Cl.: H04W 76/20, H04W 76/19, H04W 76/38, H04L 61/5053, H04L 67/143, H04L 67/2869

(54) **ELECTRONIC DEVICE FOR PERFORMING DATA COMMUNICATION AND OPERATION METHOD THEREOF**

(30) Priority: 06.10.2022 KR 20220127533; 03.11.2022 KR 20220145460
(71) Applicant: Samsung Electronics Co., Ltd., Suwon-si, Gyeonggi-do 16677 (KR)
(72) Inventor: YOO, Hyungnoh, Suwon-si, Gyeonggi-do 16677 (KR); PARK, Jongphil, Suwon-si, Gyeonggi-do 16677 (KR); YOON, Daeeui, Suwon-si, Gyeonggi-do 16677 (KR); JUNG, Yeojin, Suwon-si, Gyeonggi-do 16677 (KR); CHO, Hongrae, Suwon-si, Gyeonggi-do 16677 (KR)
(74) Representative: Walaski, Jan Filip
(86) International application number: PCT/KR2023/013322
(87) International publication number: WO 2024/076010

(57) **Abstract**

Disclosed is an electronic device comprising: an interface; a processor; and a memory that stores instructions. The instructions may be configured to, when executed by the processor, enable the electronic device to: connect a data session for cellular data communication by using a wireless modem apparatus connected via the interface; determine whether or not at least one lifetime is updated by a specified point in time prior to expiration of the at least one lifetime for the data session; if the at least one lifetime is not updated by the specified point in time prior to the expiration of the at least one lifetime, transmit, to the wireless modem apparatus, a signal requesting an IP reconfiguration; receive a second RA message from the wireless modem apparatus; and update the at least one lifetime on the basis of the second RA message. Other various embodiments are possible.

## Description

### [Technical Field]

Embodiments of the disclosure relate to an electronic device performing data communication and a method for operating the same.

### [Background Art]

With the ongoing popularization of various portable devices and the continuous advancement of communication technology, various data communication schemes are being developed. Users may use various electronic devices in their daily lives. Mobile broad band (MBB) device or MBB modem refers to a portable wireless modem device that may connect electronic devices to the Internet.

A wireless modem device may communicate with a host based on a designated interface (e.g., a network adapter interface). A wireless modem device may be connected to a host (e.g., an electronic device) via a network adapter interface, and the user may use the electronic device to access a desired service of a wireless network (e.g., Ethernet, a broadband network, or a cellular network). A wireless modem device may connect an electronic device with a wireless network and transfer packets related to user traffic.

### [Detailed Description of the Invention]

### [Technical Solution]

An electronic device and a method for operating the same according to embodiments of the disclosure may perform data communication through a wireless modem device such as a mobile broad band (MBB) device.

An electronic device according to an embodiment may comprise an interface, a processor functionally connected to the interface, and memory storing instructions. The instructions may be configured to, when executed by the processor, cause the electronic device to connect a data session for cellular data communication using a wireless modem device connected through the interface. The instructions may be configured to, when executed by the processor, cause the electronic device to receive a first router advertisement (RA) message through the data session. The instructions may be configured to, when executed by the processor, cause the electronic device to obtain at least one lifetime for the data session from the first RA message. The instructions may be configured to, when executed by the processor, cause the electronic device to determine whether the at least one lifetime is updated until a designated time before expiration of the at least one lifetime. The instructions may be configured to, when executed by the processor, cause the electronic device to, if the at least one lifetime is not updated until the designated time before the expiration of the at least one lifetime, transmit a signal requesting an IP reconfiguration to the wireless modem device. The instructions may be configured to, when executed by the processor, cause the electronic device to after transmitting the signal requesting the IP reconfiguration, receive a second RA message from the wireless modem device. The instructions may be configured to, when executed by the processor, cause the electronic device to update the at least one lifetime based on the second RA message.

An electronic device according to an embodiment may comprise an interface, a processor functionally connected to the interface, and memory storing instructions. The instructions may be configured to, when executed by the processor, cause the electronic device to connect a data session for cellular data communication using a wireless modem device connected through the interface. The instructions may be configured to, when executed by the processor, cause the electronic device to receive a first router advertisement (RA) message through the data session. The instructions may be configured to, when executed by the processor, cause the electronic device to obtain at least one lifetime for the data session from the first RA message. The instructions may be configured to, when executed by the processor, cause the electronic device to determine whether the at least one lifetime is updated until a designated time before expiration of the at least one lifetime. The instructions may be configured to, when executed by the processor, cause the electronic device to, if the at least one lifetime is not updated until the designated time before the expiration of the at least one lifetime, transmit a router request (RS) message to a router through the wireless modem device. The instructions may be configured to, when executed by the processor, cause the electronic device to, after transmitting the RS request message, receive a second RA message from the router through the wireless modem device. The instructions may be configured to, when executed by the processor, cause the electronic device to update the at least one lifetime based on the second RA message.

A method for operating an electronic device connected to a wireless modem device according to an embodiment may comprise connecting a data session for cellular data communication using the wireless modem device. The method may comprise receiving a first router advertisement (RA) message through the data session. The method may comprise obtaining at least one lifetime for the data session from the first RA message. The method may comprise determining whether the at least one lifetime is updated until a designated time before expiration of the at least one lifetime. The method may comprise, if the at least one lifetime is not updated until the designated time before the expiration of the at least one lifetime, transmitting a signal requesting an IP reconfiguration to the wireless modem device. The method may comprise, after transmitting the signal requesting the IP reconfiguration, receiving a second RA message from the wireless modem device. The method may comprise updating the at least one lifetime based on the second RA message.

A method for operating an electronic device connected to a wireless modem device according to an embodiment may comprise connecting a data session for cellular data communication using the wireless modem device. The method may comprise receiving a first router advertisement (RA) message through the data session. The method may comprise obtaining at least one lifetime for the data session from the first RA message. The method may comprise determining whether the at least one lifetime is updated until a designated time before expiration of the at least one lifetime. The method may comprise, if the at least one lifetime is not updated until the designated time before the expiration of the at least one lifetime, transmitting a router request (RS) message to a router through the wireless modem device. The method may comprise, after transmitting the RS message, receiving a second RA message from the router through the wireless modem device. The method may comprise updating the at least one lifetime based on the second RA message.

According to an embodiment, in a non-transitory computer-readable storage medium storing one or more programs, the one or more programs may store instructions to, when executed by a processor of an electronic device, cause the electronic device to a data session for cellular data communication using a wireless modem device connected through an interface, receive a first router advertisement (RA) message through the data session, obtain at least one lifetime for the data session from the first RA message, determine whether the at least one lifetime is updated until a designated time before expiration of the at least one lifetime, if the at least one lifetime is not updated until the designated time before the expiration of the at least one lifetime, transmit a signal requesting an Internet protocol (IP) reconfiguration to the wireless modem device, after transmitting the signal requesting the IP reconfiguration, receive a second RA message from the wireless modem device, and update the at least one lifetime based on the second RA message.

According to an embodiment, in a non-transitory computer-readable storage medium storing one or more programs, the one or more programs may store instructions to, when executed by a processor of an electronic device, cause the electronic device to connect a data session for cellular data communication using a wireless modem device connected through an interface, receive a first router advertisement (RA) message through the data session, obtain at least one lifetime for the data session from the first RA message, determine whether the at least one lifetime is updated until a designated time before expiration of the at least one lifetime, if the at least one lifetime is not updated until the designated time before the expiration of the at least one lifetime, transmit a router request (RS) message to a router through the wireless modem device, receive a second RA message from the router through the wireless modem device, and update the at least one lifetime based on the second RA message.

### [Brief Description of the Drawings]

FIG. 1 is a view illustrating connection between a wireless modem device and an electronic device according to an embodiment;
FIG. 2 is a block diagram illustrating an electronic device according to an embodiment of the disclosure;
FIG. 3 is a block diagram illustrating a wireless modem device according to an embodiment of the disclosure;
FIG. 4 is a view illustrating connection between an electronic device and a wireless modem device according to an embodiment;
FIG. 5 is a signal flowchart illustrating a context in which an RA message is not received according to an embodiment;
FIG. 6 is a view illustrating a configuration of an electronic device and a wireless modem device according to an embodiment;
FIG. 7 is a flowchart illustrating operations of an electronic device requesting an IP reconfiguration before a lifetime expires according to an embodiment;
FIG. 8 is a signal flowchart illustrating a procedure of detecting impending expiration of a lifetime according to an embodiment;
FIG. 9 is a signal flowchart illustrating a procedure of requesting an IP reconfiguration according to an embodiment;
FIG. 10 is a flowchart illustrating operations of an electronic device requesting network connection information before a lifetime expires according to an embodiment;
FIG. 11 is a signal flowchart illustrating a procedure of requesting network connection information according to an embodiment; and
FIG. 12 is a block diagram illustrating an electronic device in a network environment according to various embodiments.

### [Mode for Carrying out the Invention]

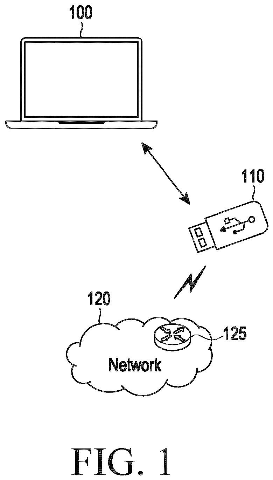

FIG. 1 is a view illustrating connection between a wireless modem device and an electronic device according to an embodiment.

Referring to FIG. 1, an electronic device 100 may use cellular data communication through a wireless modem device 110 such as an MBB device or an MBB modem. The electronic device 100 may include, e.g., a desktop computer, a laptop, or a tablet. In an embodiment, the wireless modem device 110 may be connected to the electronic device 100 using a universal serial bus (USB) or a peripheral component interconnect bus (PCI) express, and may be connected to the data network 120 (e.g., the Internet) through an access network (not shown) such as a cellular network. The wireless modem device 110 may exchange packets related to the connection with the network node (e.g., router 125) of the data network 120 and the electronic device 100.

In an embodiment, the wireless modem device 110 may use a standard protocol according to communications device class (CDC) designated in USB implementers forum (USB-IF) to support USB to serial or USB to ethernet. CDC may include subclasses such as abstract control model (ACM), ethernet networking control model (ECM), ethernet emulation model (EEM), network control model (NCM), or mobile broadband interface model (MBIM). In an embodiment, the USB-based wireless modem device 110 supporting Internet access using ethernet communication and a cellular network may be connected to the electronic device 100 using the MBIM protocol. In an embodiment, in order to support the data speed of a high-speed cellular network such as a 5G network, the wireless modem device 110 may be connected to the electronic device 100 using PCI express (PCIE) instead of USB.

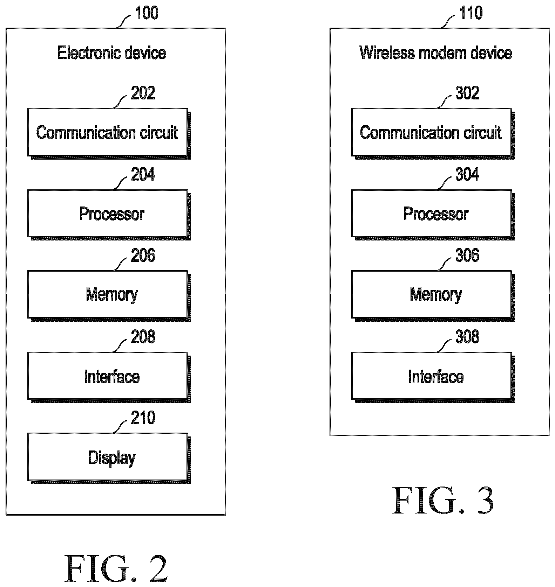

FIG. 2 is a block diagram illustrating an electronic device according to an embodiment of the disclosure.

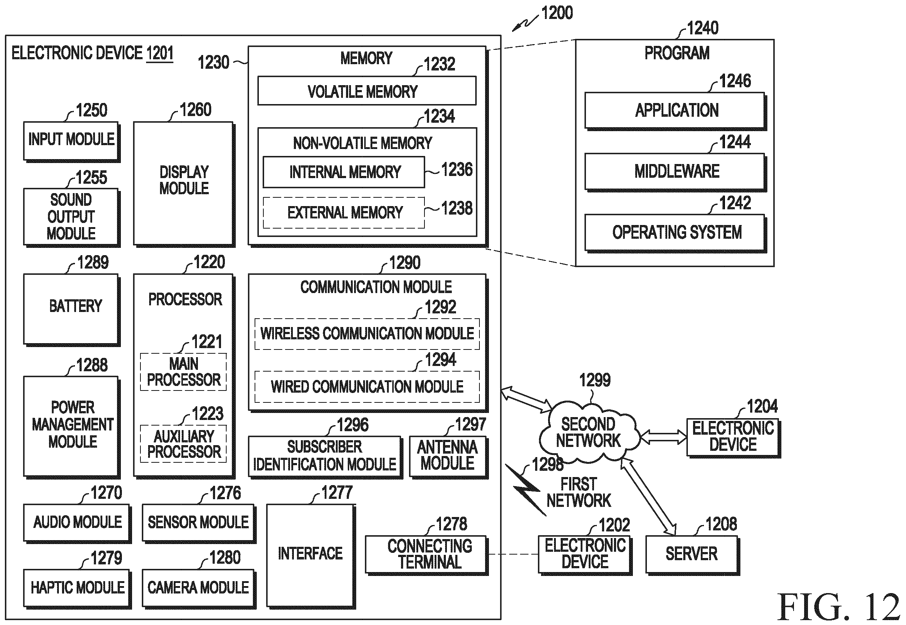

Referring to FIG. 2, an electronic device 100 (e.g., the electronic device 1201 of FIG. 12) may include at least one of a communication circuit 202 (e.g., the communication module 1290 of FIG. 12), a processor (e.g., the processing circuit) 204 (e.g., the processor 1220 of FIG. 12), memory 206 (e.g., the memory 1230 of FIG. 12), an interface 208 (e.g., the interface 1277 of FIG. 12), or a display 210 (e.g., the display module 1260 of FIG. 12). The configuration of the electronic device 100 is not limited to the illustrated example. According to embodiments, the electronic device 100 may include more or fewer components than the above-described components. Further, according to embodiments, at least one of the communication circuit 202, the processor 204, the memory 206, the interface 208, or the display 210 may be coupled or separated.

The communication circuit 202 may transmit/receive wireless signals to/from an external electronic device (not shown) using at least one antenna. The communication circuit 202 may include at least one of a transmission circuit and a reception circuit. The transmission circuit may include a radio frequency (RF) transmitter that frequency-upconverts and amplifies the transmitted signal. The reception circuit may include an RF receiver for low noise amplification and frequency down-conversion of the received signal. The communication circuit 202 may receive a signal through a wireless channel, output the signal to the processor 204, and transmit the signal output from the processor 204 through a wireless channel. In an embodiment, the communication circuit 202 may support a short-range wireless communication scheme such as Bluetooth or Wi-Fi, and/or a long-range communication scheme such as a legacy cellular network, 5G network, next-generation communication network, Internet, or computer network (e.g., LAN or WAN). In an embodiment, the electronic device 100 may not support a communication function, and the communication circuit 202 may be omitted.

The processor 204 may include (or execute) a modem and software modules that may operate according to at least one or a combination of the embodiments of the disclosure. The processor 204 may perform or control the operation of the electronic device 100 for performing at least one, or a combination of embodiments of the disclosure. The processor 204 may include at least one processing circuit. In an embodiment, the processor 204 may include at least one of a communication processor (CP) that performs control for communication or an application processor (AP) that controls a higher layer (e.g., an application). In an embodiment, the CP may include a modem.

The memory 206 may store control information (e.g., network connection information obtained from the electronic device 100) or data, and may have areas for storing data necessary for the operation of the processor 204, and data generated through the operation of the processor 204.

The interface 208 may support one or more designated protocols that may be used for the electronic device 100 to be directly (e.g., wiredly) or wirelessly connected to an external electronic device (e.g., the wireless modem device 110). According to an embodiment, the interface 208 may include a USB interface and/or a PCI express interface.

The display 210 may visually provide information to the outside (e.g., the user) of the electronic device 100. The display 210 may include, e.g., a display module, a hologram device, or a projector and a control circuit for controlling the device. According to an embodiment, the display 210 may include a touch sensor configured to detect a touch, and/or a pressure sensor configured to measure the strength of a force generated by the touch. According to an embodiment, the display 210 may visually display information related to the network connection and/or the network status.

FIG. 3 is a block diagram illustrating a wireless modem device according to an embodiment of the disclosure.

Referring to FIG. 3, a wireless modem device 110 (e.g., an MBB device) may include at least one of a communication circuit 302, a processor 304, memory 306, or an interface 308. The configuration of the wireless modem device 110 is not limited to the illustrated example. According to embodiments, the electronic device 110 may include more or fewer components than the above-described components. Further, according to embodiments, at least one of the communication circuit 302, the processor 304, the memory 306, or the interface 308 may be coupled or separated.

The communication circuit 302 may transmit/receive wireless signals to/from an external electronic device (not shown) using at least one antenna. The communication circuit 302 may include at least one of a transmission circuit and a reception circuit. The transmission circuit may include a radio frequency (RF) transmitter that frequency-upconverts and amplifies the transmitted signal. The reception circuit may include an RF receiver for low noise amplification and frequency down-conversion of the received signal. The communication circuit 302 may receive a signal through a wireless channel, output the signal to the processor 304, and transmit the signal output from the processor 304 through a wireless channel. In an embodiment, the communication circuit 302 may support a short-range wireless communication scheme such as Bluetooth or Wi-Fi, and/or a long-range communication scheme such as a legacy cellular network, 5G network, next-generation communication network, Internet, or computer network (e.g., LAN or WAN).

The processor 304 may include (or execute) a modem and software modules that may operate according to at least one or a combination of the embodiments of the disclosure. The processor 304 may perform or control the operation of the wireless modem device 110 for performing at least one, or a combination of embodiments of the disclosure. The processor 204 may include at least one processing circuit. In an embodiment, the processor 204 may include at least one of a CP that performs control for communication or an AP that controls a higher layer (e.g., an application). In an embodiment, the CP may include a modem (e.g., the modem 622).

The memory 306 may store control information (e.g., network connection information obtained from the wireless modem device 110) or data, and may have areas for storing data necessary for the operation of the processor 304, and data generated through the operation of the processor 304.

The interface 308 may support one or more designated protocols that may be used for the wireless modem device 110 to be directly (e.g., wiredly) or wirelessly connected to an external electronic device (e.g., the electronic device 100). According to an embodiment, the interface 308 may include a USB interface and/or a PCI express interface.

The electronic device 100 using the wireless modem device 100 supporting the 5G communication scheme may perform cellular data communication using the Internet protocol (IP) address (e.g., IP version 6 (IPv6) address).

There may be largely three IPv6 address allocation schemes as follows. First, manual configuration may mean a scheme in which the administrator or the user directly inputs an IPv6 address. Second, stateless address auto configuration (SLAAC) may mean a scheme in which the electronic device 100 automatically obtains an IPv6 address without a dynamic host configuration protocol (DHCP) server. Third, stateful address auto configuration may mean a scheme in which the DHCP server automatically allocates an IPv6 address of the electronic device 100.

Table 1 below illustrates address allocation schemes of IPv4 and IPv6.

**[Table 1]**

| Items | Address allocation scheme | Address allocation entity |
|---|---|---|
| IPv4 | Manual Configuration | Operator |
| | Dynamic Auto Configuration | DHCP server |
| IPv6 | Manual Configuration | Operator |
| | Stateless Address Auto Configuration | Router |
| | Stateful Address Auto Configuration | DHCP server |

The wireless modem device 110 may use the SLAAC scheme among the schemes shown in Table 1. The SLAAC scheme provides an IPv6 address to the electronic device 100, and may use the neighbor discovery protocol (NDP) defined in the Internet control message protocol version 6 (ICMPv6) to secure the validity of the IPv6 address. ICMPv6 may refer to an Internet control message protocol for IPv6. The ICMPv6 may provide NDP messages for IPv6 address allocation and securing validity. The NDP messages may include a router solicitation (RS) message and a router advertising (RA) message. The RA message may include network connection information such as default router, router lifetime, retransmission timer, maximum transmission unit (MTU), or prefix information about the IP address, and may be transmitted from the data network 120 (e.g., the router 125). The prefix information may include at least one of the IP address, the prefix of the IP address, the valid lifetime, and the preferred lifetime. In an embodiment, the router 125 may transmit an RA message to inform that its IP address is available for routing.

The RA message may be divided into an unsolicited RA message periodically transmitted from the data network 120 and an unsolicited RA message transmitted in response to the RS message transmitted by the electronic device 100. The RS message may be transferred from the electronic device 100 to receive the RA message from the data network 120. The electronic device 100 may transmit an RS message to inform routers (e.g., the routers 125) of the data network 120 of the existence of the electronic device 100. The router 125 may be configured to receive the RS message and transmit a policed RA message in response thereto.

The electronic device 100 may be connected to a wireless modem device 110 (e.g., an MBB device) using, e.g., the MBIM protocol for cellular network connection. In MBIM, each device service may be identified by a universally unique identifier (UUID). The instructions (e.g., instruction identifier (CID) exchanged between the electronic device 100 and the wireless modem device 110 may include the UUID for identifying the transferred data service.

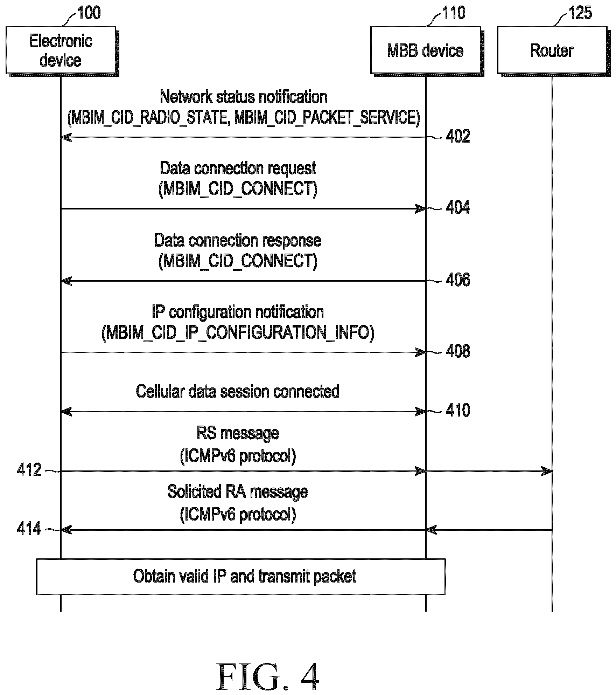

FIG. 4 is a view illustrating connection between an electronic device and a wireless modem device according to an embodiment.

Referring to FIG. 4, in operation 402, the wireless modem device 110 may transmit a network status notification message including the network status of the data network 120 to the electronic device 100. In an embodiment, the network status notification message may include at least one of MBIM_CID_RADIO_STATE indicating the wireless power state of the wireless modem device 110 or MBIM_CID_PACKET_SERVICE indicating the attach or detach state of the packet service.

In operation 404, the electronic device 100 may transmit a data connection request message to the wireless modem device 110. The data connection request message may include MBIM_CID_CONNECT including information for activating a designated data session. The MBB device 110 may activate a designated data session (e.g., a pre-connected IP data session or a newly connected IP data session) for the electronic device 100 in response to the data connection request message. In operation 406, the MBB device 110 may transmit a data connection response message to the electronic device 100. The data connection response message may include MBIM_CID_CONNECT indicating the active state of the data session activated for the electronic device 100.

In operation 408, the MBB device 110 may transmit an IP configuration notification message to the electronic device 100. The IP configuration notification message may include MBIM_CID_IP_CONFIGURATION_INFO indicating IP configuration information about the link layer for the data session. In operation 410, the electronic device 100 may identify that the data session is connected based on the reception of the IP configuration notification message. The electronic device 100 may perform data communication through the data session.

In operation 412, the electronic device 100 may transmit an RS message for requesting network connection information of ICMPv6 to the wireless modem device 110, and the RS message may reach the router 125 in the data network 120 through the MBB device 110. The network connection information may include at least one of, e.g., the valid lifetime of the IP address or router lifetime . In operation 414, the electronic device 100 may receive an RA message (e.g., a solicited RA message) responsive to the RS message. In operation 416, the electronic device 100 may complete establishment of the network connection by obtaining network connection information (e.g., valid IP address and/or gateway information) from the RA message. Accordingly, the electronic device 100 may be in a state in which data packet exchange and communication with the data network 120 are possible.

The RA message (e.g., the solicited RA message in operation 414) received by the electronic device 100 may include at least one of the valid lifetime of the IP address or the router lifetime . For example, the valid lifetime of the IP address may be 2,592,000 seconds. For example, the router lifetime may be 21,840 seconds. When the valid lifetime or router lifetime expires, the IP address or router (e.g., the router 125) may no longer be used, and the electronic device 100 may not exchange packets with the data network 120 (e.g., the router 125).

The router 120 may periodically transmit the unsolicited RA message before the IP address and router lifetime included in the previously transmitted RA message expire. The electronic device 100 may update the valid lifetime of the IP address and/or router lifetime based on the unsolicited RA message, and may continuously perform data communication by linking and securing the validity of the IP address and the router 125.

The electronic device 100 may not receive RA messages transmitted from the data network (e.g., the router 125) before the IP address and router lifetime expire for various reasons (e.g., at least one of network non-transmission, packet traffic, or an error on the data flow) or for unknown reasons. After the valid lifetime of the IP address in the electronic device 100 expires or the router lifetime expires, the electronic device 100 may no longer perform packet transmission even though the data session through the wireless modem device 110 is active.

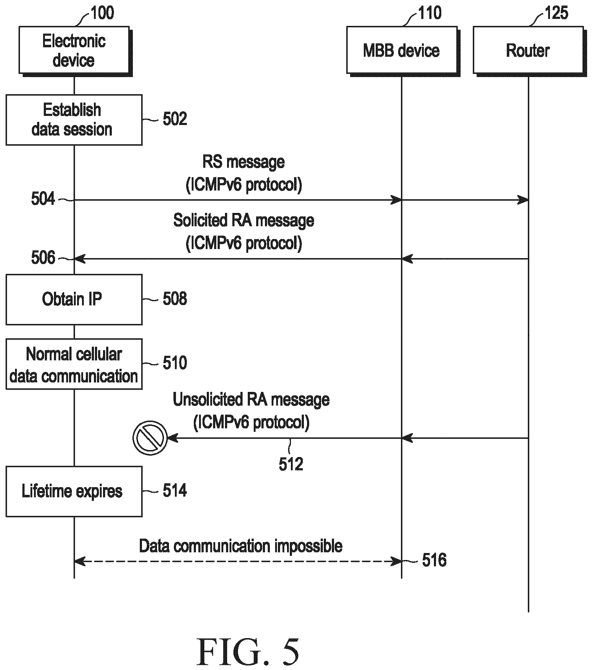

FIG. 5 is a signal flowchart illustrating a context in which an RA message is not received according to an embodiment.

Referring to FIG. 5, in operation 502, the electronic device 100 may connect a data session through operations of FIG. 5, for example. In operation 504, the electronic device 100 may transmit an RS message to the router 125 through the wireless modem device 110. In operation 506, the electronic device 110 may receive an RA message (e.g., a solicited RA message) including the valid lifetime of the IP address and/or router lifetime from the router 125 through the wireless modem device 110.

In operation 508, the electronic device 100 may obtain the IP address from the RA message. In operation 510, the electronic device 100 may perform normal cellular data communication with the router 125 through the MBB device 110 using the IP address.

In operation 512, the router 125 periodically transmits an RA message (e.g., an unsolicited RA message), but the electronic device 100 may not receive the RA message for some reason (e.g., at least one of a network failure, a packet traffic overload, or an error on the data flow).

In operation 514, the electronic device 100 may identify that the lifetime (e.g., at least one of the valid lifetime or the router lifetime) expires. In operation 516, as the lifetime expires, the electronic device 100 may not perform normal cellular data communication.

In an embodiment, the electronic device 100 may be configured to request an RA message when at least one of the following conditions is met.
- When the interface between the electronic device 100 and the wireless modem device 110 is initialized at system startup time,
- After a temporary interface failure, or after the interface between the electronic device 100 and the wireless modem device 110 is temporarily deactivated by system management, it is initialized again
- When the IP transfer function is turned off by system management
- When the electronic device 100 is connected to the wireless modem device 110 for the first time
- When the electronic device 100 is disconnected from the wireless modem device 110 for a while and then connected again

Based on the above-described conditions, when failing to continuously receive the unsolicited RA message from the router 125 although the data session of the electronic device 100 is connected, the electronic device 100 may no longer perform data communication. Embodiments of the disclosure may prevent a state of being incapable of data packet communication due to loss of validity of the IP address and router (e.g., the router 125) due to non-reception of the RA message in a state in which the data session of the electronic device 100 is normally connected.

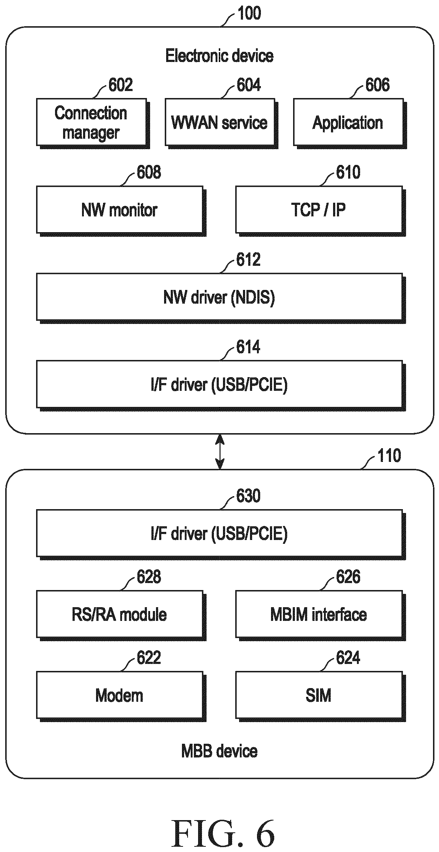

FIG. 6 is a view illustrating a configuration of an electronic device and a wireless modem device according to an embodiment. According to embodiments, at least one of the components to be described below may be omitted, modified, or combined with other components.

Referring to FIG. 6, the wireless modem device 110 (e.g., MBB device) may include at least one of a modem 622, a subscriber identification module (SIM) card 624, an MBIM interface 626, an RS/RA module 628, or an interface driver 630.

The modem 622 may be configured to perform encoding and modulation of the transmission signal and demodulation and decoding of the reception signal according to the wireless communication scheme (e.g., 3G, 4G, or 5G communication scheme). In an embodiment, the modem 622 may be implemented as a software module included in the CP in the processor 304.

The SIM card 624 may be implemented as an embedded or external card including subscriber information, network configuration information, and authentication information.

The MBIM interface 626 may communicate with the electronic device 100 according to the MBIM protocol. In an embodiment, the MBIM interface 626 may be implemented as a software module included in the CP in the processor 304. The wireless modem device 110 may transfer network status information to the electronic device 100 through the MBIM interface 626, and may receive and process a network-related request such as a connection request from the electronic device 100 through the MBIM interface 626. The electronic device 100 may include additional information in the MBIM message using the MBIM extension protocol.

The interface driver 630 may manage a wired link (e.g., the interface 308) for a physical connection between the electronic device 100 and the wireless modem device 110. In an embodiment, the interface driver 630 may support at least one of a USB interface or a PCI express interface.

The RS/RA module 628 may be implemented as a software module included in the CP in the processor 304. In an embodiment, the RS/RA module 628 may generate an RS message in response to a request (e.g., an IP reconfiguration request) from the electronic device 100. The RS message may be transmitted to a router (e.g., the router 125) by the modem 622. The RS/RA module 628 may receive an RA message (e.g., a solicited RA message) transmitted from the router 125 in response to the RS message through the modem 622. The RA message may be transferred to the electronic device 100 through the MBIM interface 626 and the interface driver 630.

The electronic device 100 may include at least one of a connection manager 602, a wireless wide area network (WWAN) service module 604, a user application (APP) 606, a network monitor 608, a transport control protocol/Internet protocol (TCP/IP) module 610, a network driver 612, or an interface driver 614. At least one of the above-described components may be implemented as a software module included in the processor 204.

The WWAN service module 604 may be, e.g., a software module included in an operating system, and may manage network status information received from the wireless modem device 110 and transmit a network-related request such as a connection request to the wireless modem device 110.

The TCP/IP module 610 may be, e.g., a software module included in an operating system, and may perform at least one of IP address allocation, gateway allocation, or packet flow control for a cellular network connection.

The network driver 612 may include a software module operating as a network adapter based on a network driver interface specification (NDIS), and may perform at least one of MBIM interface communication, packet transmission, or modem control with the wireless modem device 110.

The interface driver 614 may manage a wired link (e.g., the interface 208) for a physical connection between the wireless modem device 110 and the electronic device 100. In an embodiment, the interface driver 614 may support at least one of a USB interface or a PCI express interface.

The network monitor 608 may be a software module in the form of the user-mode driver framework. In an embodiment, the network monitor 608 may monitor network information (e.g., connection status, valid lifetime, and/or router lifetime) in real time using mobile broadband classes (e.g., instructions supporting mobile broadband account management supported by the operating system) supported by the application programming interface (API), and detect problem situations (e.g., non-reception of RA message or expiration of lifetime) based on the monitoring.

The network monitor 608 may start operating when the electronic device 100 is driven (e.g., booted) or when data communication is started through the wireless modem device 110. The network monitor 608 may obtain at least one of network information, network status information (e.g., connection status and/or packet transmission state), valid lifetime of the IP address, or router lifetime from the WWAN service module 04 in real time using a window runtime (WinRT) API.

The network monitor 608 may use the timer to determine the time when the first lifetime (e.g., either the valid lifetime of the IP address or the router lifetime ) expires. The timer may be set to a time shorter than the first lifetime by a designated value, and may be terminated (e.g., expires) at a time immediately before the first lifetime expires. The timer may be restarted whenever an RA message including a new value of the first lifetime is received. When the timer expires, the network monitor 608 may check the first lifetime again. When the first light beam is not updated because an RA message (e.g., an unsolicited RA message) is not received, the network monitor 608 may determine that a problem situation has occurred.

The network monitor 608 may lead the wireless modem device 110 to generate an RS message by notifying the wireless modem device 110 of the occurrence of the problem situation using an MBIM message (e.g., an MBIM extension message).

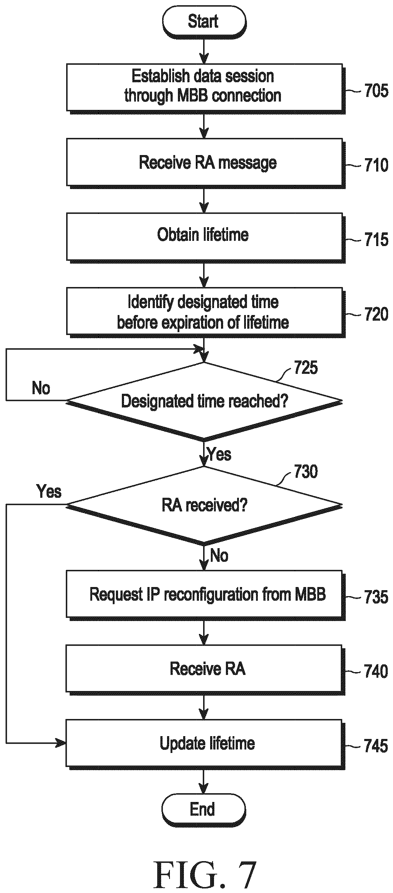

FIG. 7 is a flowchart illustrating operations of an electronic device requesting an IP reconfiguration before a lifetime expires according to an embodiment. According to embodiments, at least one of operations to be described below may be omitted, modified, or ordered. At least one of the operations to be described below in an embodiment may be executed by the processor 204 of the electronic device 100.

Referring to FIG. 7, in operation 705, the electronic device 100 (e.g., the processor 204) may connect a data session for communication with the data network 120 (e.g., the router 125) through connection with the wireless modem device 100 (e.g., an MBB device). In operation 710, the electronic device 100 (e.g., the processor 204) may receive a first RA message (e.g., an unsolicited RA message or a solicited RA message) through the data session. In operation 715, the electronic device 100 (e.g., the processor 204) may obtain network connection information (e.g., the valid lifetime of the IP address and/or the router lifetime) from the first RA message.

In operation 720, the electronic device 100 (e.g., the processor 204) may identify a designated time before the expiration of the first lifetime (e.g., either the valid lifetime of the IP address or the router lifetime ). In an embodiment, the electronic device 100 (e.g., the processor 204) may activate a timer (e.g., either a first timer based on the valid lifetime of the IP address or a second timer based on the router lifetime) that starts at the time of obtaining the first lifetime through the first RA message and is set to be shorted than the time designated by the first lifetime by a designated value. In operation 725, the electronic device 100 (e.g., the processor 204) may wait until the timer terminates (e.g., expires). When the timer is terminated ('Yes' in operation 725), the electronic device 100 (e.g., the processor 204) may determine that the first lifetime is not updated until the designated time before the expiration of the first lifetime and proceed to operation 730.

In operation 730, the electronic device 100 (e.g., the processor 204) may determine whether a new RA message (e.g., an unsolicited RA message or a solicited RA message) is received after the first RA message of operation 710 related to the starting of the timer is received. If a new RA message is received ('Yes' in operation 730), the electronic device 100 (e.g., the processor 204) may proceed to operation 745. On the other hand, if a new RA message is not received ('No' in operation 730), the electronic device 100 (e.g., the processor 204) may proceed to operation 735.

In operation 735, the electronic device 100 (e.g., the processor 204) may transmit a signal requesting IP reconfiguration to the wireless modem device 110 (e.g., the MBB device). In an embodiment, the signal may be transferred to the wireless modem device 110 through an MBIM message or an MBIM extension message. Although not shown, the wireless modem device 110 may perform IP reconfiguration in response to the signal requesting the IP reconfiguration, and the IP reconfiguration may include the operation of the wireless modem device 110 transmitting an RS message to the data network 120 (e.g., the router 125). The wireless modem device 110 may receive a second RA message (e.g., a solicited RA message) in response to the RS message, and may transmit the second RA message to the electronic device 100.

In operation 740, the electronic device 100 may receive the second RA message from the wireless modem device 110. In operation 745, the electronic device 100 may obtain a new value of the first lifetime (e.g., either the valid lifetime of the IP address or router lifetime ) from the second RA message, and may update the first lifetime based on the obtained value. The electronic device 100 may perform normal packet exchange (e.g., at least one of packet transmission or packet reception) based on the updated first lifetime.

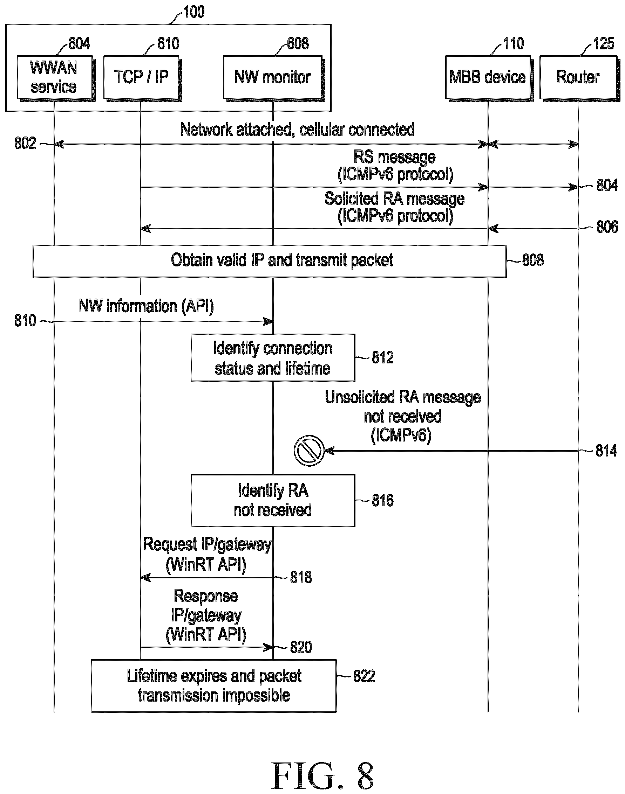

FIG. 8 is a signal flowchart illustrating a procedure of detecting impending expiration of a lifetime according to an embodiment. According to embodiments, at least one of operations to be described below may be omitted, modified, or ordered.

Referring to FIG. 8, in operation 802, the electronic device 100 (e.g., the WWAN service module 604) may connect a data session with the data network 120 (e.g., the router 125) through the wireless modem device 110 (e.g., an MBB device). In an embodiment, the wireless modem device 110 may connect the data session via a cellular network (not shown).

In operation 804, the electronic device 100 (e.g., the TCP/IP module 610) may transmit an RS message to the router 125 through the wireless modem device 110. The RS message may be transmitted using the ICMPv6 protocol through the connected data session. In operation 806, the electronic device 100 (e.g., the TCP/IP module 610) may receive an RA message (e.g., a solicited RA message) from the router 125 through the wireless modem device 110. In an embodiment, the RA message may include a valid lifetime for the IP address and/or the router lifetime. In operation 808, the electronic device 100 (e.g., the TCP/IP module 610) may normally perform packet transmission through a data session based on the valid IP address and/or router lifetime obtained through the RA message. In an embodiment, the electronic device 100 (e.g., the TCP/IP module 610) may share network connection information (e.g., valid lifetime and/or router lifetime) obtained through the RA message with the WWAN service module 604.

In operation 810, the electronic device 100 (e.g., the WWAN service module 604) may transfer network information (e.g., at least one of connection status, valid lifetime, or router lifetime) related to the data session to the network monitor 608. In operation 812, the electronic device 100 (e.g., the network monitor 608) may identify the connection status and at least one lifetime of the data session based on the received network information. In an embodiment, the electronic device 100 (e.g., the network monitor 608) may start at least one timer corresponding to the valid lifetime and/or the router lifetime. In an embodiment, the at least one timer may include a first timer and/or a second timer. The first timer may be set to be shorter than the valid lifetime by a designated value. The second timer may be set to be shorter than the router lifetime by a designated value. Although not shown, the electronic device 100 (e.g., the network monitor 608) may reset or restart at least one of the first timer or the second timer whenever a new RA message (e.g., a solicited RA message or an unsolicited RA message) is received.

In operation 814, the RA message (e.g., an unsolicited RA message) transmitted from the data network 120 (e.g., the router 125) may not reach the electronic device 100 for some reason (e.g., packet traffic overload, or an error on the data flow). In an embodiment, the router 125 may not transmit the RA message due to a malfunction.

In operation 816, the electronic device 100 (e.g., the network monitor 608) may detect that an RA message (e.g., a solicited RA message or an unsolicited RA message) is not received until at least one of the first timer or the second timer expires. In an embodiment, the electronic device 100 (e.g., the network monitor 608) may determine that the RA message is not received based on the expiration of at least one of the first timer and the second timer.

In operation 818, the electronic device 100 (e.g., the network monitor 608) may transmit an IP/gateway information request signal (e.g., an API instruction) for requesting a new lifetime from the TCP/IP module 610. In operation 820, the electronic device 100 (e.g., the TCP/IP module 610) may transmit an IP/gateway information response signal (e.g., an API instruction) including the lifetime stored in the TCP/IP module 610 to the network monitor 608. In operation 822, the electronic device 100 (e.g., the network monitor 608) may identify that the lifetime has already expired, and may determine that packet transmission is impossible.

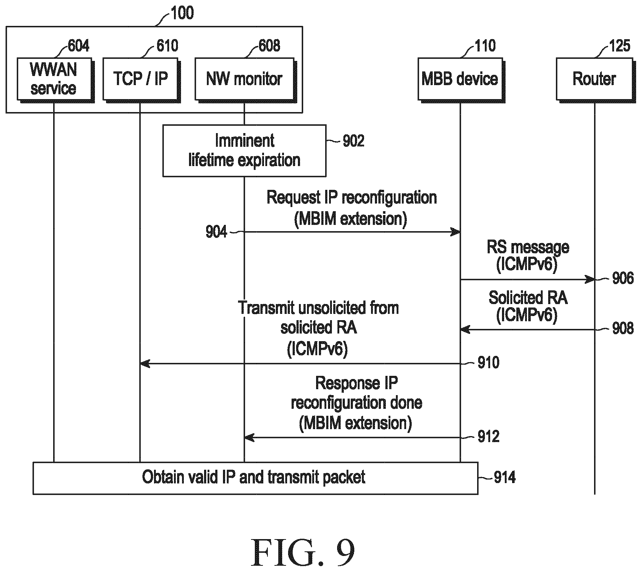

FIG. 9 is a signal flowchart illustrating a procedure of requesting an IP reconfiguration before a lifetime expires according to an embodiment. According to embodiments, at least one of operations to be described below may be omitted, modified, or ordered.

Referring to FIG. 9, in operation 902, the electronic device 100 (e.g., the network monitor 608) may detect that the expiration of at least one lifetime associated with the data session (e.g., the valid lifetime of the IP address and/or the router lifetime) is imminent. In an embodiment, the electronic device 100 (e.g., the network monitor 608) may detect that the lifetime is not updated until a designated time before the expiration of the first lifetime (e.g., either the valid lifetime of the IP address or the router lifetime ). In an embodiment, the electronic device 100 (e.g., the network monitor 608) may identify that the connection status of the data session is normal at the designated time before the expiration of the first lifetime.

In an embodiment, the electronic device 100 (e.g., the network monitor 608) may detect that at least one timer based on at least one lifetime is terminated. In an embodiment, the electronic device 100 (e.g., the network monitor 608) may detect that the first timer based on the valid lifetime obtained from the RA message (e.g., the RA message of operation 806) ends. The first timer may expire, a designated value before the expiration of the valid lifetime. In an embodiment, the electronic device 100 (e.g., the network monitor 608) may detect that the second timer based on the router lifetime obtained from the RA message (e.g., the RA message of operation 806) ends. The second timer may expire, designated value before the expiration of the router lifetime.

In operation 904, the electronic device 100 (e.g., the network monitor 608) may transmit a signal requesting IP reconfiguration to the wireless modem device 110 (e.g., the MBB device). In an embodiment, the signal may be transferred to the wireless modem device 110 (e.g., the RS/RA module 628) through the MBIM message and the MBIM extension message.

In operation 906, the wireless modem device 110 (e.g., RS/RA module 628) may transmit an RS message to the data network 120 (e.g., the router 125) for the IP reconfiguration. In operation 908, the wireless modem device 110 (e.g., RS/RA module 628) may receive an RA message (e.g., a solicited RA message) from the router 125 in response to the RS message.

In operation 910, the wireless modem device 110 (e.g., the RS/RA module 628) may transmit the RA message to the electronic device 100 (e.g., the TCP/IP module 610). In an embodiment, the wireless modem device 110 (e.g., the RS/RA module 628) may convert the solicited RA message received from the router 125 into an unsolicited RA message and transfer the unsolicited RA message to the electronic device 100. In operation 912, the wireless modem device 110 (e.g., the RS/RA module 628) may transmit a signal indicating that IP reconfiguration is completed to the electronic device 100 (e.g., the network monitor 608).

In operation 914, the electronic device 100 (e.g., the TCP/IP module 610) may normally perform packet transmission through the data session based on the valid IP address and/or router lifetime obtained through the RA message (e.g., an unsolicited RA message). In an embodiment, the electronic device 100 (e.g., the TCP/IP module 610) may share network connection information (e.g., valid lifetime and/or router lifetime) obtained through the RA message with the WWAN service module 604. In an embodiment, the electronic device 100 (e.g., the WWAN module 604) may share network connection information (e.g., valid lifetime and/or router lifetime) obtained through the RA message with the network monitor 608.

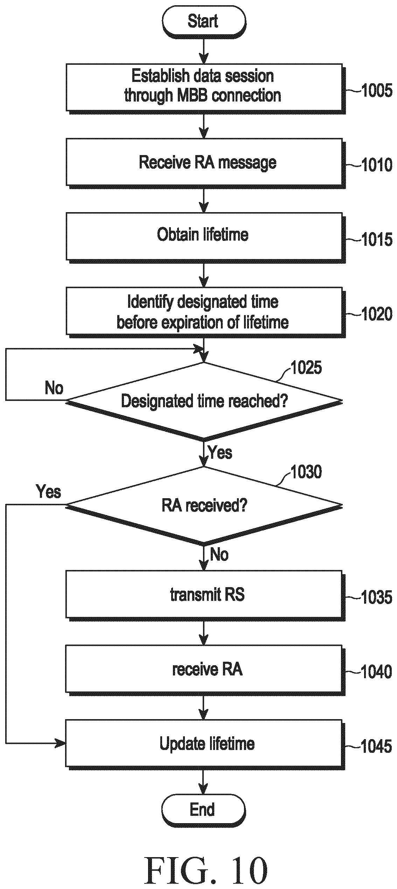

FIG. 10 is a flowchart illustrating operations of an electronic device requesting network connection information before a lifetime expires according to an embodiment. According to embodiments, at least one of operations to be described below may be omitted, modified, or ordered. At least one of the operations to be described below in an embodiment may be executed by the processor 204 of the electronic device 100.

Referring to FIG. 10, in operation 1005, the electronic device 100 (e.g., the processor 204) may connect a data session for communication with the data network 120 (e.g., the router 125) through connection with the wireless modem device 100. In operation 1010, the electronic device 100 (e.g., the processor 204) may receive a first RA message (e.g., an unsolicited RA message or a solicited RA message) through the data session. In operation 1015, the electronic device 100 (e.g., the processor 204) may obtain network connection information (e.g., the valid lifetime of the IP address and/or the router lifetime) from the first RA message.

In operation 1020, the electronic device 100 (e.g., the processor 204) may identify a designated time before the expiration of the first lifetime (e.g., either the valid lifetime of the IP address or the router lifetime ). In an embodiment, the electronic device 100 (e.g., the processor 204) may activate a timer (e.g., either a first timer based on the valid lifetime of the IP address or a second timer based on the router lifetime) that starts at the time of obtaining the first lifetime through the first RA message and is set to be shorted than the time designated by the first lifetime by a designated value. In operation 1025, the electronic device 100 (e.g., the processor 204) may wait until the timer terminates (e.g., expires). When the timer is terminated ('Yes' in operation 1025), the electronic device 100 (e.g., the processor 204) may determine that the first lifetime is not updated until the designated time before the expiration of the first lifetime and proceed to operation 1030.

In operation 1030, the electronic device 100 (e.g., the processor 204) may determine whether a new RA message (e.g., an unsolicited RA message or a solicited RA message) is received after the first RA message of operation 1010 related to the starting of the timer is received. If a new RA message is received ('Yes' in operation 1030), the electronic device 100 (e.g., the processor 204) may proceed to operation 1045. On the other hand, if a new RA message is not received ('No' in operation 1030), the electronic device 100 (e.g., the processor 204) may proceed to operation 1035.

In operation 1035, the electronic device 100 (e.g., the processor 204) may transmit an RS message to the data network 120 (e.g., the router 125) through the wireless modem device 110 (e.g., an MBB device). In an embodiment, the RS message may be transmitted by the TCP/IP module 610 of the electronic device 100. Although not shown, the RS message may be transferred to the router 125 via the wireless modem device 110. The router 125 may transmit a second RA message (e.g., a solicited RA message) to the wireless modem device 110 in response to the RS message.

In operation 1040, the electronic device 100 may receive the second RA message from the wireless modem device 110. In operation 1045, the electronic device 100 may obtain a new value of the first lifetime (e.g., either the valid lifetime of the IP address or router lifetime ) from the second RA message, and may update the first lifetime based on the obtained value. The electronic device 100 may perform normal packet exchange (e.g., at least one of packet transmission or packet reception) based on the updated first lifetime.

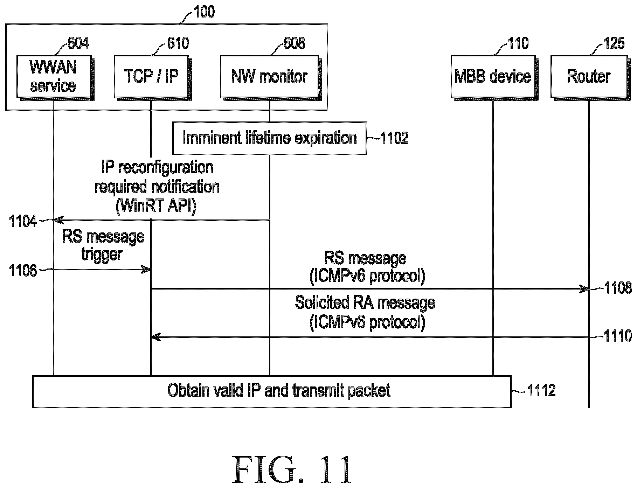

FIG. 11 is a signal flowchart illustrating a procedure of requesting network connection information according to an embodiment. According to embodiments, at least one of operations to be described below may be omitted, modified, or ordered.

Referring to FIG. 11, in operation 1102, the electronic device 100 (e.g., the network monitor 608) may detect that the expiration of at least one lifetime associated with the data session (e.g., the valid lifetime of the IP address and/or the router lifetime) is imminent. In an embodiment, the electronic device 100 (e.g., the network monitor 608) may detect that the lifetime is not updated until a designated time before the expiration of the first lifetime (e.g., either the valid lifetime of the IP address or the router lifetime ). In an embodiment, the electronic device 100 (e.g., the network monitor 608) may identify that the connection status of the data session is normal at the designated time before the expiration of the first lifetime.

In an embodiment, the electronic device 100 (e.g., the network monitor 608) may detect that at least one timer based on at least one lifetime is terminated. In an embodiment, the electronic device 100 (e.g., the network monitor 608) may detect that the first timer based on the valid lifetime obtained from the RA message (e.g., the RA message of operation 806) ends. The first timer may expire, a designated value before the expiration of the valid lifetime. In an embodiment, the electronic device 100 (e.g., the network monitor 608) may detect that the second timer based on the router lifetime obtained from the RA message (e.g., the RA message of operation 806) ends. The second timer may expire, designated value before the expiration of the router lifetime.

In operation 1104, the electronic device 100 (e.g., the network monitor 608) may transmit a signal (e.g., a WinRT API instruction) indicating that IP reconfiguration is required to the WWAN service module 604. In an embodiment, the signal may include an MBIM message (e.g., MBIM_CID_IP_CONFIGURATION) including the connection status information. In operation 1106, the electronic device 100 (e.g., the WWAN service module 604) may transmit a signal for triggering an RS message to the TCP/IP module 610.

In operation 1108, the electronic device 100 (e.g., the TCP/IP module 610) may transmit an RS message to the data network 120 (e.g., the router 125) through the wireless modem device 110 in response to the RS message trigger. In operation 1110, the electronic device 100 (e.g., the TCP/IP module 610) may receive an RA message (e.g., a solicited RA message) from the router 125 in response to the RS message.

In operation 1112, the electronic device 100 (e.g., the TCP/IP module 610) may normally perform packet transmission through the data session based on the valid IP address and/or router lifetime obtained through the RA message (e.g., a solicited RA message). In an embodiment, the electronic device 100 (e.g., the TCP/IP module 610) may share network connection information (e.g., valid lifetime and/or router lifetime) obtained through the RA message with the WWAN service module 604. In an embodiment, the electronic device 100 (e.g., the WWAN module 604) may share network connection information (e.g., valid lifetime and/or router lifetime) obtained through the RA message with the network monitor 608.

In an embodiment, an electronic device 100 according to embodiments of the disclosure may include at least one of the components of the electronic device 1201 of FIG. 12.

FIG. 12 is a block diagram illustrating an electronic device 1201 in a network environment 1200 according to various embodiments.

Referring to FIG. 12, the electronic device 1201 in the network environment 1200 may communicate with at least one of an electronic device 1202 via a first network 1298 (e.g., a short-range wireless communication network), or an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In an embodiment, at least one (e.g., the connecting terminal 1278) of the components may be omitted from the electronic device 1201, or one or more other components may be added in the electronic device 101. According to an embodiment, some (e.g., the sensor module 1276, the camera module 1280, or the antenna module 1297) of the components may be integrated into a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1201 includes the main processor 1221 and the auxiliary processor 1223, the auxiliary processor 1223 may be configured to use lower power than the main processor 1221 or to be specified for a designated function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 123. According to an embodiment, the auxiliary processor 1223 (e.g., the neural processing unit) may include a hardware structure specified for artificial intelligence model processing. The artificial intelligence model may be generated via machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by other component (e.g., the processor 1220) of the electronic device 1201, from the outside (e.g., a user) of the electronic device 1201. The input module 1250 may include, for example, a microphone, a mouse, a keyboard, keys (e.g., buttons), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display 1260 may include, for example, a display, a hologram device, or a projector and control circuitry to control a corresponding one of the display, hologram device, and projector. According to an embodiment, the display 1260 may include a touch sensor configured to detect a touch, or a pressure sensor configured to measure the intensity of a force generated by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 101, and then generate an electrical signal or data value corresponding to the detected state. According to an embodiment, the sensor module 1276 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or motion) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device 1204 via a first network 1298 (e.g., a short-range communication network, such as Bluetooth^{™}, wireless-fidelity (Wi-Fi) direct, or infrared data association (IrDA)) or a second network 1299 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1292 may identify or authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device). According to an embodiment, the antenna module 1297 may include one antenna including a radiator formed of a conductor or conductive pattern formed on a substrate (e.g., a printed circuit board (PCB)). According to an embodiment, the antenna module 1297 may include a plurality of antennas (e.g., an antenna array). In this case, at least one antenna appropriate for a communication scheme used in a communication network, such as the first network 1298 or the second network 1299, may be selected from the plurality of antennas by, e.g., the communication module 1290. The signal or the power may then be transmitted or received between the communication module 1290 and the external electronic device via the selected at least one antenna. According to an embodiment, other parts (e.g., radio frequency integrated circuit (RFIC)) than the radiator may be further formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1201 and the external electronic device 1204 via the server 1208 coupled with the second network 1299. The external electronic devices 1202 or 1204 each may be a device of the same or a different type from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an Internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

Embodiments of the disclosure may prevent the electronic device 100 using the wireless modem device 110 (e.g., an MBB device) from being incapable of cellular data communication due to expiration of the valid lifetime of the IP address or the router lifetime.

According to embodiments of the disclosure, the electronic device 100 may perform IP reconfiguration based on detecting that expiration of the lifetime is imminent without the user directly rebooting the electronic device 100 or, after deactivating cellular communication, reactivating cellular communication.

According to embodiments of the disclosure, the electronic device 100 may monitor and detect impending expiration of lifetime to actively restore a problem situation, keep the cellular network connection normal and seamless without a user operation, and prevent inconvenience of restoration of a cellular data communication error.

Effects obtainable from the disclosure are not limited to the above-mentioned effects, and other effects not mentioned may be apparent to one of ordinary skill in the art from the following description.

An electronic device 100 according to an embodiment may comprise an interface 208, a processor 204 functionally connected to the interface, and memory 206 storing instructions. The instructions may be configured to, when executed by the processor, cause the electronic device to connect a data session for cellular data communication using a wireless modem device 110 connected through the interface. The instructions may be configured to, when executed by the processor, cause the electronic device to receive a first router advertisement (RA) message through the data session. The instructions may be configured to, when executed by the processor, cause the electronic device to obtain at least one lifetime for the data session from the first RA message. The instructions may be configured to, when executed by the processor, cause the electronic device to determine whether the at least one lifetime is updated until a designated time before expiration of the at least one lifetime. The instructions may be configured to, when executed by the processor, cause the electronic device to, if the at least one lifetime is not updated until the designated time before the expiration of the at least one lifetime, transmit a signal requesting an IP reconfiguration to the wireless modem device. The instructions may be configured to, when executed by the processor, cause the electronic device to after transmitting the signal requesting the IP reconfiguration, receive a second RA message from the wireless modem device. The instructions may be configured to, when executed by the processor, cause the electronic device to update the at least one lifetime based on the second RA message.

In an embodiment, the at least one lifetime may include at least one of a valid lifetime of an IP address or a router lifetime.

In an embodiment, the second RA message may include an unsolicited RA message.

In an embodiment, the instructions may be configured to, when executed by the processor, cause the electronic device to start at least one timer set to a time shorter than the at least one lifetime by a designated value, if a third RA message including a new value of the at least one lifetime is received, restart the at least one timer, and to transmit the signal requesting the IP reconfiguration if the at least one timer is terminated.

In an embodiment, the instructions may be configured to, when executed by the processor, cause the electronic device to transmit the signal requesting the IP reconfiguration if a connection status of the data session is normal at the designated time before the expiration of the at least one lifetime.

An electronic device 100 according to an embodiment may comprise an interface 208, a processor 204 functionally connected to the interface, and memory 206 storing instructions. The instructions may be configured to, when executed by the processor, cause the electronic device to connect a data session for cellular data communication using a wireless modem device 110 connected through the interface. The instructions may be configured to, when executed by the processor, cause the electronic device to receive a first router advertisement (RA) message through the data session. The instructions may be configured to, when executed by the processor, cause the electronic device to obtain at least one lifetime for the data session from the first RA message. The instructions may be configured to, when executed by the processor, cause the electronic device to determine whether the at least one lifetime is updated until a designated time before expiration of the at least one lifetime. The instructions may be configured to, when executed by the processor, cause the electronic device to, if the at least one lifetime is not updated until the designated time before the expiration of the at least one lifetime, transmit a router request (RS) message to a router through the wireless modem device. The instructions may be configured to, when executed by the processor, cause the electronic device to, after transmitting the RS request message, receive a second RA message from the router through the wireless modem device. The instructions may be configured to, when executed by the processor, cause the electronic device to update the at least one lifetime based on the second RA message.

In an embodiment, the at least one lifetime may include at least one of an effective lifetime or a router lifetime of an IP address.

In an embodiment, the second RA message may include a solicited RA message.

In an embodiment, the instructions may be configured to, when executed by the processor, cause the electronic device to start at least one timer set to a time shorter than the at least one lifetime by a designated value, if a third RA message including a new value of the at least one lifetime is received, restart the at least one timer, and to transmit the RS message if the at least one timer is terminated.

In an embodiment, the instructions may be configured to, when executed by the processor, cause the electronic device to transmit the RS message if a connection status of the data session is normal at the designated time before the expiration of the at least one lifetime.

A method for operating an electronic device 100 connected to a wireless modem device 110 according to an embodiment may comprise connecting (705) a data session for cellular data communication using the wireless modem device. The method may comprise receiving (710) a first router advertisement (RA) message through the data session. The method may comprise obtaining (715) at least one lifetime for the data session from the first RA message. The method may comprise determining (720, 725, 730) whether the at least one lifetime is updated until a designated time before expiration of the at least one lifetime. The method may comprise, if the at least one lifetime is not updated until the designated time before the expiration of the at least one lifetime, transmitting (735) a signal requesting an IP reconfiguration to the wireless modem device. The method may comprise, after transmitting the signal requesting the IP reconfiguration, receiving (740) a second RA message from the wireless modem device. The method may comprise updating (745) the at least one lifetime based on the second RA message.

In an embodiment, the at least one lifetime may include at least one of an effective lifetime or a router lifetime of an IP address.

In an embodiment, the second RA message may include an unsolicited RA message.

In an embodiment, requesting the IP reconfiguration may include starting at least one timer set to a time shorter than the at least one lifetime by a designated value, if a third RA message including a new value of the at least one lifetime is received, restarting the at least one timer, and transmitting the signal requesting the IP reconfiguration if the at least one timer is terminated.

In an embodiment, transmitting the signal requesting the IP reconfiguration may include determining to transmit the signal requesting the IP reconfiguration if a connection status of the data session is normal at the designated time before the expiration of the at least one lifetime.

A method for operating an electronic device 100 connected to a wireless modem device 110 according to an embodiment may comprise connecting (1005) a data session for cellular data communication using the wireless modem device. The method may comprise receiving (1010) a first router advertisement (RA) message through the data session. The method may comprise obtaining (1015) at least one lifetime for the data session from the first RA message. The method may comprise determining (1020, 1025, 1030) whether the at least one lifetime is updated until a designated time before expiration of the at least one lifetime. The method may comprise, if the at least one lifetime is not updated until the designated time before the expiration of the at least one lifetime, transmitting (1035) a router request (RS) message to a router through the wireless modem device. The method may comprise, after transmitting the RS message, receiving (1040) a second RA message from the router through the wireless modem device. The method may comprise updating (1045) the at least one lifetime based on the second RA message.

In an embodiment, the at least one lifetime may include at least one of a valid lifetime of an IP address or a router lifetime.

In an embodiment, the second RA message may include a solicited RA message.

In an embodiment, transmitting the RS message may include starting at least one timer set to a time shorter than the at least one lifetime by a designated value, if a third RA message including a new value of the at least one lifetime is received, restarting the at least one timer, and determining to transmit the RS message if the at least one timer is terminated.

In an embodiment, transmitting the RS message may include determining to transmit the RS message if a connection status of the data session is normal at the designated time before the expiration of the at least one lifetime.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100), comprising:
an interface (208);
a processor (204) functionally connected to the interface; and
memory (206) storing instructions, wherein the instructions are configured to, when executed by the processor, cause the electronic device to:
connect a data session for cellular data communication using a wireless modem device (110) connected through the interface;
receive a first router advertisement (RA) message through the data session;
obtain at least one lifetime for the data session from the first RA message;
determine whether the at least one lifetime is updated until a designated time before expiration of the at least one lifetime;
based on the at least one lifetime being not updated until the designated time before the expiration of the at least one lifetime, transmit a signal requesting an Internet protocol (IP) reconfiguration to the wireless modem device;
after transmitting the signal requesting the IP reconfiguration, receive a second RA message from the wireless modem device; and
update the at least one lifetime based on the second RA message.

2. The electronic device of claim 1, wherein the at least one lifetime includes at least one of a valid lifetime of an IP address or a router lifetime.

3. The electronic device of claim 1 or 2, wherein the second RA message includes an unsolicited RA message.

4. The electronic device of any one of claims 1 to 3, wherein the instructions are configured to, when executed by the processor, cause the electronic device to:
start at least one timer set to a time shorter than the at least one lifetime by a designated value;
based on a third RA message including a new value of the at least one lifetime being received, restart the at least one timer; and
transmit the signal requesting the IP reconfiguration based on the at least one timer terminated.

5. The electronic device of any one of claims 1 to 4, wherein the instructions are configured to, when executed by the processor, cause the electronic device to:
based on a connection status of the data session being normal at the designated time before the expiration of the at least one lifetime transmit the signal requesting the IP reconfiguration.

6. An electronic device (100), comprising:
an interface (208);
a processor (204) functionally connected to the interface; and
memory (206) storing instructions, wherein the instructions are configured to, when executed by the processor, cause the electronic device to:
connect a data session for cellular data communication using a wireless modem device (110) connected through the interface;
receive a first router advertisement (RA) message through the data session;
obtain at least one lifetime for the data session from the first RA message;
determine whether the at least one lifetime is updated until a designated time before expiration of the at least one lifetime;
based on the at least one lifetime being not updated until the designated time before the expiration of the at least one lifetime, transmit a router request (RS) message to a router through the wireless modem device;
after transmitting the RS request message, receive a second RA message from the router through the wireless modem device; and
update the at least one lifetime based on the second RA message.

7. The electronic device of claim 6, wherein the at least one lifetime includes at least one of a valid lifetime of an IP address or a router lifetime.

8. The electronic device of claim 6 or 7, wherein the second RA message includes a solicited RA message.

9. The electronic device of any one of claims 6 to 8, wherein the instructions are configured to, when executed by the processor, cause the electronic device to:
start at least one timer set to a time shorter than the at least one lifetime by a designated value;
based on a third RA message including a new value of the at least one lifetime being received, restart the at least one timer; and
transmit the RS message based on the at least one timer expired.

10. The electronic device of any one of claims 6 to 9, wherein the instructions are configured to, when executed by the processor, cause to,
based on a connection status of the data session being normal at the designated time before the expiration of the at least one lifetime, cause the electronic device to transmit the RS message

11. A method for operating an electronic device (100) connected to a wireless modem device (110), the method comprising:
establishing (705) a data session for cellular data communication using the wireless modem device;
receiving (710) a first router advertisement (RA) message through the data session;
obtaining (715) at least one lifetime for the data session from the first RA message;
determining (720, 725, 730) whether the at least one lifetime is updated until a designated time before expiration of the at least one lifetime;
based on the at least one lifetime being not updated until the designated time before the expiration of the at least one lifetime, transmitting (735) a signal requesting an Internet protocol (IP) reconfiguration to the wireless modem device;
after transmitting the signal requesting the IP reconfiguration, receiving (740) a second RA message from the wireless modem device; and
updating (745) the at least one lifetime based on the second RA message.

12. The method of claim 11, wherein the at least one lifetime includes at least one of a valid lifetime of an IP address or a router lifetime, and
wherein the second RA message includes an unsolicited RA message.

13. A method for operating an electronic device (100) connected to a wireless modem device (110), the method comprising:
establishing (1005) a data session for cellular data communication using the wireless modem device;
receiving (1010) a first router advertisement (RA) message through the data session;
obtaining (1015) at least one lifetime for the data session from the first RA message;
determining (1020, 1025, 1030) whether the at least one lifetime is updated until a designated time before expiration of the at least one lifetime;
based on the at least one lifetime being not updated until the designated time before the expiration of the at least one lifetime, transmitting (1035) a router request (RS) message to a router through the wireless modem device;
after transmitting the RS message, receiving (1040) a second RA message from the router through the wireless modem device; and
updating (1045) the at least one lifetime based on the second RA message.

14. The method of claim 13, wherein the at least one lifetime includes at least one of a valid lifetime of an IP address or a router lifetime, and
wherein the second RA message includes a solicited RA message.

15. A non-transitory computer-readable storage medium storing one or more programs, the one or more programs including instructions to, when executed by a processor of an electronic device, cause the electronic device to:
establish a data session for cellular data communication using a wireless modem device (110) connected through an interface;
receive a first router advertisement (RA) message through the data session;
obtain at least one lifetime for the data session from the first RA message;
determine whether the at least one lifetime is updated until a designated time before expiration of the at least one lifetime;
based on the at least one lifetime being not updated until the designated time before the expiration of the at least one lifetime, transmit a signal requesting an Internet protocol (IP) reconfiguration to the wireless modem device;
after transmitting the signal requesting the IP reconfiguration, receive a second RA message from the wireless modem device; and
update the at least one lifetime based on the second RA message.
